# EUROPÄISCHE PATENTSCHRIFT

(11) **EP 2 394 353 B1**
(45) Veröffentlichungstag und Bekanntmachung des Hinweises auf die Patenterteilung: **07.06.2017**
(21) Anmeldenummer: 09771747.4
(22) Anmeldetag: 14.12.2009
(51) Int. Cl.: H02K 3/47

(54) **GLEICHSTROMMOTOR**
DC MOTOR
MOTEUR À COURANT CONTINU

(30) Priorität: 09.02.2009 DE 102009000707
(43) Veröffentlichungstag der Anmeldung: 14.12.2011
(73) Patentinhaber: Robert Bosch GmbH, 70442 Stuttgart (DE)
(72) Erfinder: KRAUTH, Wolfgang, 77855 Achern-Sasbachried (DE); KOENIG, Tilo, 77815 Buehl (DE)
(86) Internationale Anmeldenummer: PCT/EP2009/067023
(87) Internationale Veröffentlichungsnummer: WO 2010/088997

(56) Entgegenhaltungen:
- GB-A- 2 310 766
- US-A- 5 525 850
- US-A- 5 794 884

## Beschreibung

Die Erfindung betrifft einen Gleichstrommotor umfassend einen zylinderförmigen Spulenträger, der auf beiden seitlichen Endabschnitten Drahtführungselemente zur Führung eines ersten Wickeldrahts und eines zweiten Wickeldrahts einer Luftspaltwicklung umfasst.

### Stand der Technik

Aus der US 5 525 850 A und der US 5 794 884 sind Ausführungsformen gemäß der Gattung des unabhängigen Anspruch 1 bekannt.

Ein Gleichstrommotor bezeichnet einen Elektromotor, der mit Gleichstrom betrieben wird, oder einen Generator, der umgekehrt mechanische Energie in Strom wandelt. Gleichstrommotoren bestehen aus einem unbeweglichen Teil, dem Stator, und einem drehbar gelagerten Teil, dem Rotor. Gleichstrommotoren können als Innenläufer oder Außenläufer ausgebildet sein. Bei einem Innenläufer ist der Rotor der innere Teil und der Stator der äußere Teil des Gleichstrommotors. Außenläufer weisen eine umgekehrte Anordnung des Rotors und des Stators auf.

Gleichstrommotoren mit einer Luftspaltwicklung werden vorzugsweise als bürstenlose Gleichstrommotoren, elektronisch kommutierte Gleichstrommotoren oder auch als Glockenankermotoren bezeichnet und zeichnen sich dadurch aus, dass Luftspaltwicklungen vorzugsweise als zweisträngige Luftspulen ausgebildet sind, die einen Luftspalt aufweisen, in dem die Spulenwicklungen verlaufen, der Gleichstrommotor kein Rastmoment ausbildet und sich vollkommen frei drehen lässt. Ferner weisen Luftspaltwicklungen geringe mechanische Schwingungen, eine große Laufruhe sowie eine geringe Induktivität auf.

Aus der DE 20 2006 007 619 U1 ist ein Gleichstrommotor mit einer Luftspaltwicklung bekannt. Die Luftspaltwicklung ist mehrlagig und als Wellenwicklung mit schräg verlaufenden Wicklungsrichtungen ausgebildet, wodurch sich ein hoher Aufwand bei der Ausführung der Wicklung ergibt. Die Luftspaltwicklung ist als eine eisenlose Wicklung ausgebildet, die im Luftspalt rotieren und mechanisch kommutiert ist. Der Wickeldraht der Spulenwicklung ist ein Backlackdraht. Nach dem Herstellen der Spulenwicklung wird ein Verbacken durchgeführt, da die Wicklung bei dem Gleichstrommotor das rotierende Teil ist und deshalb eine kompakte Einheit bilden muss.

### Offenbarung der Erfindung

Es ist die Aufgabe der Erfindung, einen Gleichstrommotor mit einer einfachen Ablage und Führung des Wickeldrahtes bei der Herstellung einer Luftspaltwicklung bereitzustellen.

Die Aufgabe der Erfindung wird durch einen Gleichstrommotor nach Anspruch 1 gelöst. Weitere vorteilhafte Ausführungsformen der Erfindung sind in den abhängigen Ansprüchen angegeben.

Die Erfindung weist einen Gleichstrommotor mit einem zylinderförmigen Spulenträger auf. Der Spulenträger umfasst auf beiden seitlichen Endabschnitten Drahtführungselemente zur Führung eines ersten Wickeldrahts und eines zweiten Wickeldrahts einer Luftspaltwicklung. Der erste Wickeldraht und der zweite Wickeldraht weisen jeweils rechteckförmige Wicklungsabschnitte auf, wobei die rechteckförmigen Wicklungsabschnitte des ersten Wickeldrahts und die rechteckförmigen Wicklungsabschnitte des zweiten Wickeldrahts überlappend auf dem zylinderförmigen Spulenträger angeordnet sind. Die Drahtführungselemente sind ausgelegt, den ersten Wickeldraht und den zweiten Wickeldraht aneinander vorbeizuführen.

Vorteil des erfindungsgemäßen Gleichstrommotors ist, ein einfacher Aufbau der Wicklung als Luftspaltwicklung, wodurch ein sehr ruhiger und verlustarmer Lauf des Motors ermöglicht wird. Ferner weist der Motor eine vollkommene Rastmomentfreiheit auf. Für den Aufbau des Gleichstrommotors werden nur sehr wenige Bauteile benötigt, wodurch das Gewicht reduziert und die Herstellung vereinfacht werden kann. Der Wickeldraht muss auch dann, wenn er auf den rotierenden Teil des Gleichstrommotors angeordnet ist, nicht verbacken bzw. vergossen werden. Dadurch wird die Fertigungszeit reduziert.
In einer Ausführungsform der Erfindung sind die beiden seitlichen Endabschnitte des Spulenträgers steckbar und ringförmig ausgebildet und vorzugsweise über ein Ringelement miteinander verbunden. Dabei weist das Ringelement einen geringeren Durchmesser als die Endabschnitte auf. Ferner ist ein Blechpaket im Bereich des Ringelements angeordnet. Da die einzelnen Bauteile nur aufeinander gesteckt werden müssen, ermöglicht diese modulare Ausgestaltung eine einfache Herstellung des Gleichstrommotors.
In einer weiteren Ausführungsform der Erfindung ist ein Endabschnitt des Spulenträgers deckelförmig, wobei mittig ein Lagersitz mit einer Bohrung ausgebildet ist. Diese Auslegung ermöglicht einen einfachen Zusammenbau des Gleichstrommotors.

Gemäß der Erfindung weisen beide seitlichen Endabschnitte des Spulenträgers jeweils eine regelmäßige Anordnung von Halterungen als Drahtführungselemente auf. Dabei ist der erste und der zweite Wickeldraht abwechselnd seitlich an den Halterungen und auf den Halterungen geführt. Ferner weisen die Halterungen eine U-förmige Nut auf, um den auf den Halterungen geführten ersten und den zweiten Wickeldraht zu fixieren. Durch diese Auslegung werden der erste Wickeldraht und der zweite Wickeldraht aneinander vorbeigeführt, wobei sich eine einfache Führung der Luftspaltwicklung ergibt.
In einer weiteren Ausführungsform der Erfindung sind als Drahtführungselemente an den beiden seitlichen Endabschnitten des Spulenträgers Noppen vorgesehen, wobei der erste und der zweite Wickeldraht abwechselnd an den Noppen geführt sind. Die Noppen auf den beiden seitlichen Endabschnitten sind so angeordnet, dass die Gesamtlänge des ersten Wickeldrahts und des zweiten Wickeldrahts vorzugsweise gleich ist. Durch die gleiche Gesamtlänge der ersten und des zweiten Wickeldrahts ergibt sich für beide Wicklungen der gleiche Widerstand und durch die Flächengleichheit im durchfluteten Bereich wird auch die Spannung in Form und Höhe gleich gehalten.

Ferner weisen bei einer weiteren Ausführungsform, nicht Teil der beanspruchten Erfindung, die Spulenträger vier ringförmige Ansteckelemente und eine regelmäßige beabstandete Anordnung von Aufsätzen als Drahtführungselemente auf. Die Ansteckelemente sind so versetzt zueinander angeordnet, dass die Aufsätze aufsatzfreien Abschnitten gegenüberliegen. Dabei wird der erste Wickeldraht über die Aufsätze der ersten Ansteckelemente und der zweite Wickeldraht über die Aufsätze der zweiten Ansteckelemente geführt. Ferner sind die Ansteckelemente auf beiden Seiten eines Blechpakets angeordnet. Durch diese Auslegung wird die Ausführung der Luftspaltwicklung erleichtert, da Kanäle zur Führung des Wickeldrahts vorgegeben sind. Des Weiteren ist ein einfacher Aufbau des Gleichstrommotor gewährleistet, da die einzelnen Bauteile aufeinander gesteckt werden.
Ferner ist gemäß einer weiteren Ausführungsform der Erfindung der Spulenträger aus Kunststoff. Da Kunststoff sich einfach in komplexe Formen spritzen lässt entsteht so ein kostengünstiges Multifunktionsteil.
Die Erfindung wird im Folgenden anhand von Ausführungsbeispielen unter Bezugnahme auf die beigefügten Zeichnungen näher erläutert. In den Zeichnungen zeigen:
- Fig. 1: einen erfindungsgemäßen Gleichstrommotor;
- Fig. 2: eine erste Ausführungsform eines Stators in einem erfindungsgemäßen Gleichstrommotor mit einer Luftspaltwicklung;
- Fig. 3: die in Fig. 2 gezeigte erste Ausführungsform ohne Luftspaltwicklung; und
- Fig. 4: eine zweite Ausführungsform eines Stators in einem Gleichstrommotor mit einer Luftspaltwicklung.

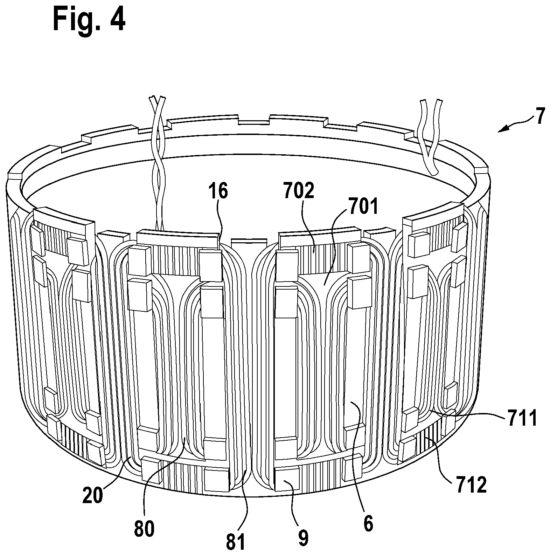

Die Ausführungsform gemäß Figur 4 ist nicht zur Erfindung zugehörig.

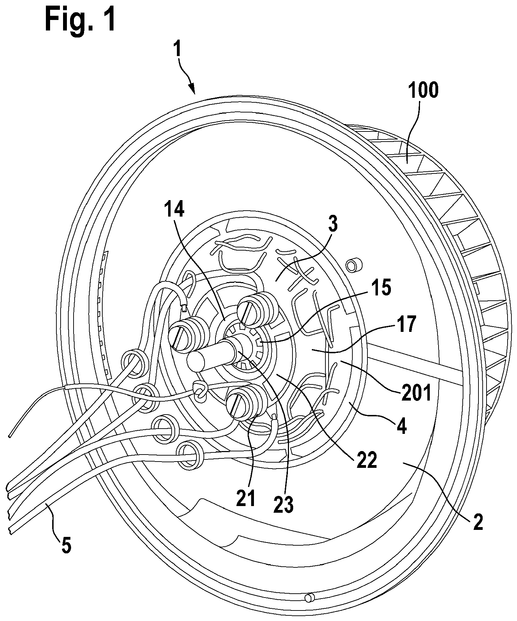

Figur 1 zeigt einen erfindungsgemäßen Gleichstrommotor 1 mit einem Rotor 2 und einem Stator 3. Der Gleichstrommotor 1 ist als Außenläufer ausgebildet, wobei der Rotor 2 einen Permanentmagneten 4 und der Stator 3 mit einem Spulenträger 17 für eine mehrsträngige Wicklung aufweisen. Der Spulenträger 17 besitzt die Form eines Zylinders mit einem deckelförmigen Endabschnitt 201.

In dem deckelförmigen Endabschnitt 201 des zylinderförmigen Spulenträgers 17 ist mittig ein Lagersitz 14 zur Aufnahme eines Lagers 15 angeordnet. Das Lager 15 wird in den Lagersitz 14 des Spulenträgers 17 vormontiert. In dem Lager 15 ist eine Welle 23 des Gleichstrommotors 1 angeordnet. Ferner sind im deckelförmigen Endabschnitt 201 des Spulenträgers 17 um den Lagersitz 14 herum jeweils drei Anschlusslagerungen 21 angeordnet. Auf den Anschlusslagerungen 21 sind Anschlüsse 5 befestigt, die mit den Leiterenden der Wicklung auf dem Spulenträger 17 verbunden sind. Ferner sind auf dem deckelförmigen Endabschnitt 201 des Spulenträgers 17 drei Luftlöcher 22 vorgesehen.

Der Rotor 2 des Gleichstrommotors 1 wird von einem Radiallüfter 100 umschlossen. Bei einem Radiallüfter 100 wird die Luft parallel bzw. axial zur Welle 23 des Radiallüfters 100 angesaugt und durch die Rotation des Radiallaufrades um 90° umgelenkt und radial ausgeblasen. Es gibt einseitig und beidseitig ansaugende Radiallüfter mit und ohne Gehäuse. Die modulare Ausgestaltung des Gleichstrommotors 1 ermöglicht eine einfache Herstellung, da die einzelnen Bauteile nur aufeinander gesteckt werden müssen.

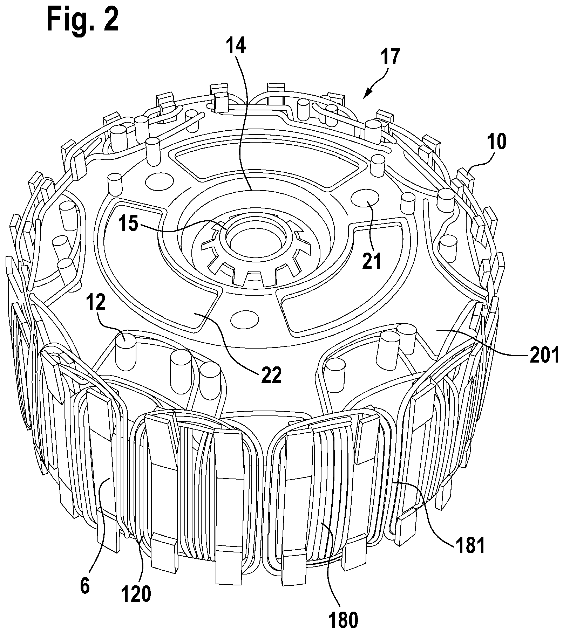

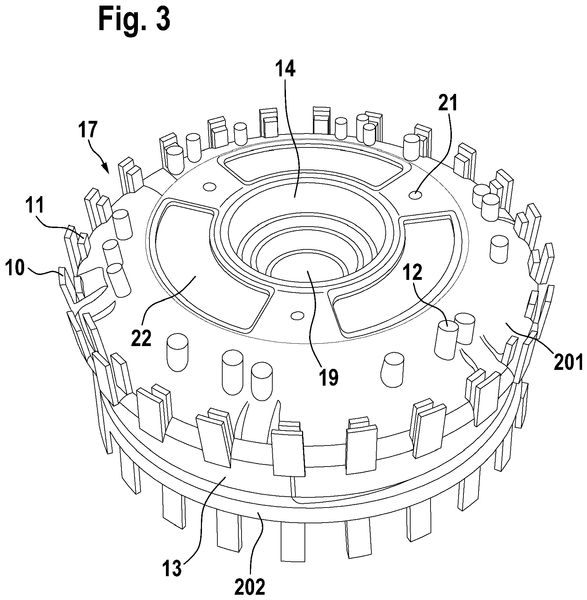

Figur 2 und Figur 3 zeigen den Stator 3 in einer ersten Ausführungsform, wobei in Figur 3 der Spulenträger 17 ohne Bleckpaket 6 sowie ohne Luftspaltwicklung dargestellt ist. In der Mitte des deckelförmigen Endabschnitts 201, 202 des Spulenträgers 17 ist der Lagersitz 14 mit einer Bohrung 19 ausgebildet. In diese Bohrung 19 des Lagersitzes 14 wird das Lager 15 des Gleichstrommotors 1 eingesetzt. Des Weiteren sind um den Lagersitz 14 herum drei Anschlusslagerungen 21 sowie drei Luftlöcher 22 dargestellt.

Der zylinderförmige Spulenträger 17 ist zweiteilig ausgebildet, wobei neben dem deckelförmigen Endabschnitt 201 ein weiterer Endabschnitt 202 vorgesehen ist, der vorzugsweise auch deckelförmig ausgebildet ist. Auf den beiden seitlichen Endabschnitten 201, 202 sind Drahtführungselemente 10, 12 vorgesehen. Die beiden Endabschnitte 201, 202 des Spulenträgers 17 sind steckbar und ringförmig ausgeformt und vorzugsweise über ein Ringelement 13, das in der Figur 3 gezeigt ist, miteinander verbunden. Das Ringelement 13 weist eine zylindrische Form auf und hat gegenüber den Endabschnitten 201, 202 des Spulenträgers 17 einen geringeren Durchmesser. Auf dem Ringelement 13 ist, wie in Figur 2 gezeigt, das Blechpaket 6 angeordnet. Das Bleckpaket 6 dient als magnetischer Rückschluss und setzt sich aus Elektroblechen zusammen. Das Bleckpaket 6 wird mit einem dünnen Isolierband bzw. einer Isolierfolie isoliert. Das Blechpaket 6 kann aber auch auf eine andere Weise oder gar nicht isoliert werden.
Die beiden seitlichen Endabschnitte 201, 202 des Spulenträgers 17 weisen jeweils eine regelmäßige Anordnung von Halterungen 10 als Drahtführungselemente auf. Jede Halterung 10 weist eine U-förmige Nut 11 auf. Ferner sind Noppen 12 als Drahtführungselemente auf den Endabschnitten 201, 202 angeordnet, wobei jeweils drei Noppen 12 eine Gruppe bilden.
Auf den Drahtführungselementen 10, 12 erfolgt die Luftspaltwicklung, bestehend aus einem ersten Wickeldraht 180 und einem zweiten Wickeldraht 181, wie in Figur 2 gezeigt ist. Ferner können neben dem ersten Wickeldraht 180 und dem zweiten Wickeldraht weitere Wickeldrähte vorgesehen werden. Der erste Wickeldraht 180 wird seitlich an den beiden Seiten der Halterung 10 und an der Noppengruppe des oberen deckelförmigen Endabschnitts 201 des Spulenträgers 17 geführt. Der zweite Wickeldraht 181 wird auf der Nut 11 der Halterung 10 und an der Noppengruppe des unteren deckelförmigen Endabschnitts 202 des Spulenträgers 17 geführt, die nicht in der Darstellung in Figur 3 ersichtlich sind. Die Noppen 12 der Noppengruppe des unteren Endabschnitts 202 des Spulenträgers 17 sind um einen halben Wickel zu den Noppen 12 der Noppengruppe des oberen Endabschnitts 201 des Spulenträgers 17 versetzt angeordnet. Die Luftspaltwicklung weist rechteckförmige Wicklungsabschnitte 120 auf. Die Wicklungsabschnitte 120 sind abwechseln vom ersten Wickeldraht 180 zum zweiten Wickeldraht 181 gebildet, wobei der erste Wickeldraht 180 und der zweite Wickeldraht 181 aneinander vorbeigeführt werden und sich dadurch überlappen.

Da der erste Wickeldraht 180 hinter dem zweiten Wickeldraht 181 und an den Noppen 12 des oberen Endabschnitts 201 des Spulenträgers 17 geführt wird und der zweite Wickeldraht 181 vor dem ersten Wickeldraht 180 und an den Noppen 12 des unteren Endabschnitts 202 des Spulenträgers geführt wird, weisen der erste Wickeldraht 180 und der zweite Wickeldraht 181 vorzugsweise die gleiche Gesamtlänge der Luftspaltwicklung auf. Dadurch weisen der erste Wickeldraht 180 und der zweite Wickeldraht 181 den gleichen Widerstand auf, wobei auch der magnetische Fluss durch die Wicklung konstant gehalten wird.
In der in Figur 2 gezeigten Ausführungsform sind insgesamt zwölf Wicklungsabschnitte 120 des ersten Wickeldrahtes 180 und zwölf Wicklungsabschnitte 120 des zweiten Wickeldrahtes 181 vorgesehen. Es können jedoch mehr oder weniger Wicklungsabschnitte vorgesehen werden. Die Wicklungsabschnitte 120 des ersten und zweiten Wickeldrahtes 180, 181 sind jeweils einstückig gewickelt. Dadurch weisen beide Wickeldrähte 180, 181 jeweils einen Anfang und ein Ende auf.
Die zwölf Wicklungsabschnitte 120 der beiden Wicklungsdrähte 180, 181 bilden bei Bestromung in abwechselnder Reihenfolge jeweils sechs Nord-Pole und sechs Süd-Pole. Ferner sind die zwölf Wicklungsabschnitte 120 des ersten Wickeldrahtes 180 zu den zwölf Wicklungsabschnitten 120 des zweiten Wickeldrahtes 181 um die Anzahl eines halben Wicklungsabschnittes 120 verschoben, wobei auf den Nord-Pol der beiden Wickeldrähte 180, 181 der Süd-Pol der beiden Wickeldrähte 180, 181 folgt. Alternativ kann die Anordnung der Pole verändert werden. Bei der umgekehrten Bestromung der beiden Wicklungsdrähte 180, 181 kehren sich auch die von Ihnen gebildeten Pole um.

Figur 4 zeigt den Stator 3 gemäß einer zweiten Ausführungsform, nicht Teil der beanspruchten Erfindung. Ein zylinderförmiger Spulenträger 7 ist ringförmig ausgebildet und auf einem Blechpaket 6 angeordnet. Das Bleckpaket 6 dient als magnetischer Rückschluss und setzt sich aus aufeinander gestapelten Elektroblechen zusammen. Die Elektrobleche werden mit einem dünnen Isolierband bzw. Isolierfolie nach außen elektrisch isoliert. Jedoch kann das Blechpaket 6 auch auf eine andere Weise hergestellt und isoliert werden.

Der Spulenträger 7 weist vier Ansteckelemente 701, 702, 711, 712 auf, wobei jeweils zwei Ansteckelemente 701, 702, 711, 712 beidseitig auf das Blechpakete 6 aufgesteckt sind. Ferner wird das zweite Ansteckelement 702, 712 jeweils auf das erste Ansteckelement 701, 711 aufgesteckt. Diese Ausgestaltung hat einen einfachen Zusammenbau der einzelnen Bauteile zum Vorteil.

Die Ansteckelementen 701, 702, 711, 712 weisen eine regelmäßige beabstandete Anordnung von Aufsätzen 9 als Drahtführungselemente auf. Die Aufsätze 9 dienen zur Vereinfachung der Luftspaltwicklung und weisen Kanäle 16 zur Drahtführung auf. Ferner sind die ersten Ansteckelemente 701, 711 zu den zweiten Ansteckelementen 702, 712 so zueinander versetzt angeordnet, dass die Aufsätze 9 des einen Ansteckelements aufsatzfreien Abschnitten des anderen Ansteckelements gegenüberliegen. Dabei wird ein erster Wickeldraht 80 über die Aufsätze 9 der ersten unteren Ansteckelemente 701, 711 und ein zweiter Wickeldraht 81 über die Aufsätze 9 der zweiten oberen Ansteckelemente 702, 712 geführt, wobei der erste Wickeldraht 80 hinter dem zweiten Wickeldraht 81 vorbeigeführt ist. Dabei überlappen sich der erste Wickeldraht 80 und der zweite Wickeldraht 81 ohne einen Kurzschluss zu erzeugen.

Die Luftspaltwicklung ist in rechteckförmige Wicklungsabschnitte 20 unterteilt, wobei die Wicklungsabschnitte 20 abwechselnd vom ersten Wickeldraht 80 und zweiten Wickeldraht 81 gebildet sind und die Wicklungsabschnitte 20 sich überlagern. Da der erste Wickeldraht 80 auf den Aufsätzen 9 der unteren Ansteckelemente 701, 711 geführt ist, sind die Wicklungsabschnitte 20 des ersten Wickeldraht 80 kürzer ausgelegt, als die Wicklungsabschnitte 20 die vom zweiten Wickeldraht 81 gebildet sind, da dieser Wickeldraht 81 auf den Aufsätzen 9 der oberen Ansteckelemente 702, 712 geführt ist. Alternativ zu den Aufsätzen 9 können auch andere Drahtführungselemente angeordnet werden.

Der Spulenträger 7, 17 der ersten und zweiten Ausführungsform ist vorzugsweise aus Kunststoff gefertigt. Kunststoff ist im Vergleich zu Metall oder einem keramischen Werkstoff relativ kostengünstig in komplexen Formen herstellbar, hat eine geringe elektrische Leitfähigkeit und besitzt eine relativ geringe Dichte, dadurch kann das Gewicht des Spulenträgers 7, 17 reduziert werden. Es können jedoch andere isolierende Materialien verwendet werden.

Der in den ersten und zweiten Ausführungsformen gezeigte erste Wickeldraht 80, 180 und der zweite Wickeldraht 81, 181 sind aus Kupferlackdraht ausgebildet. Der Kupferlackdraht wird bei der Fertigung mit einer elektrisch isolierenden Lackschicht überzogen. Die Dicke und das Gewicht dieser Lackisolation sind im Vergleich zu anderen Isolierstoffen mit gleicher Wirkung sehr gering.

Die Drahtführungselemente 9, 10, 12 an den beiden Endabschnitten 201, 202 des Spulenträgers 7, 17 in den gezeigten Ausführungsformen sind so ausgelegt, dass der erste Wickeldraht 80, 180 an den zweiten Wickeldraht 81, 181 aneinander vorbeigeführt wird, wobei sich der erste Wickeldraht 80, 180 und der zweite Wickeldraht 81, 181 überlappen. Dies ermöglicht einen einfachen Aufbau der Wicklung als Luftspaltwicklung, wodurch ein sehr ruhiger und verlustarmer Lauf des Motors gewährleistet wird. Ferner muss der Wickeldraht auch dann, wenn er auf den rotierenden Teil des Gleichstrommotors angeordnet ist, nicht verbacken bzw. vergossen werden. Dadurch wird die Fertigungszeit reduziert.

## Patentansprüche

1. Gleichstrommotor umfassend einen zylinderförmigen Spulenträger (7; 17), der auf beiden seitlichen Endabschnitten (201, 202) Drahtführungselemente (9; 10, 12) zur Führung eines ersten Wickeldrahts (80; 180) und eines zweiten Wickeldrahts (81; 181) einer Luftspaltwicklung umfasst, wobei der erste Wickeldraht (80; 180) und der zweite Wickeldraht (81; 181) jeweils rechteckförmige Wicklungsabschnitte (20; 120) aufweisen, und wobei die rechteckförmigen Wicklungsabschnitte (20; 120) des ersten Wickeldrahts (80; 180) und die rechteckförmigen Wicklungsabschnitte (20; 120) des zweiten Wickeldrahts (81; 181) überlappend auf dem zylinderförmigen Spulenträger (7; 17) angeordnet sind und die Drahtführungselemente (9; 10, 12) ausgelegt sind, den ersten Wickeldraht (80; 180) und den zweiten Wickeldraht (81;181) aneinander vorbeizuführen, **dadurch gekennzeichnet, dass** beide seitlichen Endabschnitte (201, 202) des Spulenträgers (14) jeweils eine regelmäßige Anordnung von Halterungen (10) als Drahtführungselemente (10, 12) aufweisen, wobei der erste und der zweite Wickeldraht (180, 181) abwechselnd seitlich an den Halterungen (10) und auf den Halterungen (10) geführt sind, wobei die Halterungen (10) jeweils eine U-förmige Nut (11) aufweisen, um den auf der Halterung (10) geführten ersten und zweiten Wickeldraht (180, 181) zu fixieren.

2. Gleichstrommotor nach Anspruch 1, **dadurch gekennzeichnet, dass** neben dem ersten Wickeldraht (80; 180) und dem zweiten Wickeldraht (81; 181) weitere Wickeldrähte vorgesehen sind.

3. Gleichstrommotor nach einem der vorhergehenden Ansprüche, **dadurch gekennzeichnet, dass** die beiden seitlichen Endabschnitte (201, 202) des Spulenträgers (17) steckbar und ringförmig ausgebildet sind.

4. Gleichstrommotor nach Anspruch 3, **dadurch gekennzeichnet, dass** die beiden seitlichen Endabschnitte (201, 202) des Spulenträgers (17) über ein Ringelement (13) miteinander verbunden sind, wobei das Ringelement (13) einen geringeren Durchmesser als die Endabschnitte (201, 202) aufweist und ein Blechpaket (6) im Bereich des Ringelements (13) angeordnet ist.

5. Gleichstrommotor nach einem der vorhergehenden Ansprüchen, **dadurch gekennzeichnet, dass** ein Endabschnitt (201, 202) des Spulenträgers (17) deckelförmig ist, wobei mittig ein Lagersitz (14) mit einer Bohrung (19) ausgebildet ist.

6. Gleichstrommotor nach einem der vorhergehenden Ansprüche, **dadurch gekennzeichnet, dass** als Drahtführungselemente (10, 12) an den beiden seitlichen Endabschnitten (201, 202) des Spulenträgers (17) Noppen (12) vorgesehen sind, wobei der erste und der zweite Wickeldraht (180, 181) abwechselnd an den Noppen (12) geführt sind und wobei die Noppen (12) auf den beiden seitlichen Endabschnitten (201, 202) so angeordnet sind, dass die Gesamtlänge des ersten Wickeldrahts (180) und des zweiten Wickeldrahts (181) vorzugsweise gleich ist.

7. Gleichstrommotor nach einem der vorhergehenden Ansprüche, **dadurch gekennzeichnet, dass** der Spulenträger (7; 17) aus Kunststoff ist.

## Claims

1. DC motor comprising a cylindrical coil former (7; 17) which, on both lateral end sections (201, 202), comprises wire guide elements (9; 10, 12) for guiding a first winding wire (80; 180) and a second winding wire (81; 181) of an air gap winding, wherein the first winding wire (80; 180) and the second winding wire (81; 181) each have rectangular winding sections (20; 120), and wherein the rectangular winding sections (20; 120) of the first winding wire (80; 180) and the rectangular winding sections (20; 120) of the second winding wire (81; 181) are arranged in an overlapping manner on the cylindrical coil former (7; 17) and the wire guide elements (9; 10, 12) are designed to guide the first winding wire (80; 180) and the second winding wire (81; 181) past one another, **characterized in that** the two lateral end sections (201, 202) of the coil former (14) each have a regular arrangement of holders (10) as wire guide elements (10, 12), wherein the first and the second winding wire (180, 181) are guided alternately to the side of the holders (10) and onto the holders (10), wherein the holders (10) each have a U-shaped slot (11) in order to fix the first and second winding wire (180, 181) which are guided onto the holder (10).

2. DC motor according to Claim 1, **characterized in that** further winding wires are provided in addition to the first winding wire (80; 180) and the second winding wire (81; 181).

3. DC motor according to either of the preceding claims, **characterized in that** the two lateral end sections (201, 202) of the coil former (17) are of pluggable and annular design.

4. DC motor according to Claim 3, **characterized in that** the two lateral end sections (201, 202) of the coil former (17) are connected to one another by means of a ring element (13), wherein the ring element (13) has a smaller diameter than the end sections (201, 202) and a laminated core (6) is arranged in the region of the ring element (13).

5. DC motor according to one of the preceding claims, **characterized in that** an end section (201, 202) of the coil former (17) is in the form of a cover, wherein a bearing seat (14) with a bore (19) is formed in the centre.

6. DC motor according to one of the preceding claims, **characterized in that** studs (12) are provided as wire guide elements (10, 12) on the two lateral end sections (201, 202) of the coil former (17), wherein the first and the second winding wire (180, 181) are guided alternately on the studs (12), and wherein the studs (12) are arranged on the two lateral end sections (201, 202) such that the total length of the first winding wire (180) and of the second winding wire (181) are preferably the same.

7. DC motor according to one of the preceding claims, **characterized in that** the coil former (7; 17) is composed of plastic.

## Revendications

1. Moteur à courant continu comprenant un support de bobine (7 ; 17) en forme de cylindre, lequel comprend, sur deux sections terminales (201, 202) latérales, des éléments de guidage de fil (9 ; 10, 12) destinés au guidage d'un premier fil de bobinage (80 ; 180) et d'un deuxième fil de bobinage (81 ; 181) d'une bobine à entrefer, selon lequel le premier fil de bobinage (80 ; 180) et le deuxième fil de bobinage (81 ; 181) présentent respectivement des sections d'enroulement (20 ; 120) rectangulaires et selon lequel les sections d'enroulement (20 ; 120) rectangulaires du premier fil de bobinage (80 ; 180) et les sections d'enroulement (20 ; 120) rectangulaires du deuxième fil de bobinage (81 ; 181) sont disposées de manière à se chevaucher sur le support de bobine (7 ; 17) en forme de cylindre et les éléments de guidage de fil (9 ; 10, 12) sont configurés en vue de faire passer le premier fil de bobinage (80 ; 180) et le deuxième fil de bobinage (81 ; 181) l'un à côté de l'autre, **caractérisé en ce que** les deux sections terminales (201, 202) latérales du support de bobine (14) présentent respectivement une disposition régulière de supports (10) sous la forme d'éléments de guidage de fil (10, 12), où le premier et le deuxième fils de bobinage (180, 181) sont guidés latéralement en alternance au niveau des supports (10) et sur les supports (10), selon lequel les supports (10) présentent respectivement une rainure (11) en forme de « U » en vue de permettre la fixation du premier et du deuxième fils de bobinage (180, 181) guidés sur le support (10).

2. Moteur à courant continu selon la revendication 1, **caractérisé en ce que** d'autres fils de bobinage sont prévus en plus du premier fil de bobinage (80 ; 180) et du deuxième fil de bobinage (81 ; 181).

3. Moteur à courant continu selon l'une des revendications précédentes, **caractérisé en ce que** les deux sections terminales (201, 202) latérales du support de bobine (17) sont conçues de forme circulaire et de manière à pouvoir être enfichées.

4. Moteur à courant continu selon la revendication 3, **caractérisé en ce que** les deux sections terminales (201, 202) latérales du support de bobine (17) sont raccordées l'une à l'autre par l'intermédiaire d'un élément en anneau (13), selon lequel l'élément en anneau (13) présente un diamètre plus petit que les sections terminales (201, 202) et un empilage de tôles (6) est disposé dans la zone de l'élément en anneau (13).

5. Moteur à courant continu selon l'une des revendications précédentes, **caractérisé en ce qu'**une section terminale (201, 202) du support de bobine (17) est en forme de couvercle, au centre duquel un siège de palier (14) est conçu avec un alésage (19).

6. Moteur à courant continu selon l'une des revendications précédentes, **caractérisé en ce que** des protubérances (12) sont prévues sous la forme d'éléments de guidage de fil (10, 12) au niveau des deux sections terminales (201, 202) latérales du support de bobine (17), selon lequel le premier et le deuxième fils de bobinage (180, 181) sont guidés en alternance au niveau des protubérances (12) et selon lequel les protubérances (12) sont disposées sur les deux sections terminales (201, 202) latérales, de telle sorte que la longueur totale du premier fil de bobinage (180) et la longueur totale du deuxième fil de bobinage (181) sont de préférence identiques.

7. Moteur à courant continu selon l'une des revendications précédentes, **caractérisé en ce que** le support de bobine (7 ; 17) est constitué de plastique.
